# EUROPÄISCHE PATENTSCHRIFT

(11) **EP 4 048 579 B1**
(45) Veröffentlichungstag und Bekanntmachung des Hinweises auf die Patenterteilung: **29.07.2026**
(21) Anmeldenummer: 20792574.4
(22) Anmeldetag: 09.10.2020
(51) Int. Cl.: B62D 65/18, B66F 7/06

(54) **VERFAHREN ZUM BETREIBEN EINER ANLAGE UND ANLAGE**
METHOD FOR OPERATING AN INSTALLATION AND INSTALLATION
PROCÉDÉ DE FONCTIONNEMENT D'UNE INSTALLATION ET INSTALLATION

(30) Priorität: 24.10.2019 DE 102019007402
(43) Veröffentlichungstag der Anmeldung: 31.08.2022
(73) Patentinhaber: SEW-EURODRIVE GmbH & Co. KG, 76646 Bruchsal (DE)
(72) Erfinder: SCHÜLZKE, Bernd, 29221 Celle (DE)
(86) Internationale Anmeldenummer: PCT/EP2020/078443
(87) Internationale Veröffentlichungsnummer: WO 2021/078540

(56) Entgegenhaltungen:
- WO-A1-2015/060053
- CN-A- 104 925 693
- US-A1- 2012 181 735
- US-A1- 2014 084 227

## Beschreibung

Die Erfindung betrifft ein Verfahren zum Betreiben einer Anlage und eine Anlage.

Es ist allgemein bekannt, dass ein Objekt von einer Fördervorrichtung in einer Förderrichtung bewegbar ist.

Aus der DE 10 2016 203 778 A1 ist eine Transportvorrichtung bekannt.

Aus der US 2015 / 0 136 568 A1 ist ein Fördersystem bekannt.

Aus der DE 31 27 784 A1 ist eine Kernaustragvorrichtung bekannt.

Aus der US 2012/181735 A1 ist als nächstliegender Stand der Technik eine Hubvorrichtung für ein Arbeitsstück bekannt, wobei diese jeweils den Oberbegriff des Anspruchs 1 sowie 7 offenbart.

Aus der WO 2015/060053 A1 ist eine Unterstützungsvorrichtung für ein Arbeitsstück bekannt.

Aus der CN 104 925 693 B ist eine Hebevorrichtung bekannt.

Aus der US 2014 / 084227 A1 ist eine motorisierte vertikal adjustierbare Hubtischvorrichtung bekannt.

Der Erfindung liegt daher die Aufgabe zugrunde, eine Anlage möglichst effizient zu betreiben.

Erfindungsgemäß wird die Aufgabe bei dem Verfahren nach den in Anspruch 1 und bei der Anlage nach den in Anspruch 7 angegebenen Merkmalen gelöst.

Wichtige Merkmale der Erfindung bei dem Verfahren zum Betreiben einer Anlage,
insbesondere System, mit einer von einem ersten Antrieb antreibbaren Fördervorrichtung und einer Hubeinheit, sind, dass in einem ersten Verfahrensschritt ein Objekt auf einer Trägereinheit aufgenommen ist,
wobei zeitlich nachfolgend, insbesondere also in einem zweiten Verfahrensschritt, die Trägereinheit mittels der Fördervorrichtung in Förderrichtung mit einer Bremsbeschleunigung bewegt, insbesondere gefördert, wird,
wobei während dieser mit Bremsbeschleunigung ausgeführten Bewegung der Trägereinheit das Objekt von der Hubeinheit in Querrichtung, insbesondere quer zur Förderrichtung, insbesondere in zur Förderrichtung senkrechten Richtung, bewegt, insbesondere angehoben, wird,
wobei die Hubeinheit einen zu einer Drehachse der Hubeinheit schwenkbar angeordneten, stets in der Querrichtung ausgerichteten Zentrierdorn aufweist.

Von Vorteil ist dabei, dass aus einer erfassten Linearposition eine Winkelposition für den Hebelarm bestimmbar ist und somit ein synchrones Bewegen der Trägereinheit und des Hebelarms ausführbar ist.

Die Hubeinheit weist einen um die Drehachse drehbar angeordneten Hebelarm, insbesondere Hubbalken, auf,
wobei der Hebelarm relativ zum ersten Rad drehbar gelagert ist, wobei die Drehachse koaxial zur Radachse ausgerichtet ist,
wobei an dem Hebelarm ein vom ersten Rad beabstandetes zweites Rad angeordnet und drehbar gelagert ist,
wobei ein Riemen, insbesondere Zahnriemen oder Kette, auf den beiden Rädern angeordnet ist,
wobei der Hebelarm um die Drehachse, insbesondere also Radachse des ersten Rads, mittels eines zweiten Antriebs drehbar ist,
wobei das zweite Rad drehbar gelagert ist am Hebelarm. Von Vorteil ist dabei, dass mittels des Riemens eine einfache kostengünstige Koppelung realisierbar ist.

Der 1.ODurchmesser des ersten Rades ist gleich groß wie der Durchmesser des zweiten Rades. Von Vorteil ist dabei, dass der Betrag des Drehwinkels des Hebelarmes dem Betrag des Drehwinkels des ersten Rads gleicht, obwohl allerdings die Drehrichtung umgekehrt ist.

Die erste Fördervorrichtung weist einen ersten Elektromotor auf
und
der zweite Antrieb weist einen zweiten Elektromotor auf. Von Vorteil ist dabei, dass eine einfache Realisierung ausführbar ist.

Bei einer vorteilhaften Ausgestaltung ist die Drehachse senkrecht zur Förderrichtung und senkrecht zur Querrichtung ausgerichtet. Von Vorteil ist dabei, dass der Zentrierdorn in Querrichtung, insbesondere also senkrecht zur Fördervorrichtung bewegbar ist.

Bei einer vorteilhaften Ausgestaltung wird die Position der Trägereinheit, insbesondere die Linearposition der Trägereinheit in Förderrichtung, erfasst und daraus wird ein Sollwinkelwert für den Hebelarm bestimmt,
wobei die Drehwinkelstellung des Hebelarms, insbesondere bezüglich der Drehachse, als Istwinkelwert erfasst wird und auf den Sollwinkelwert hin geregelt wird, insbesondere indem der zweite Antrieb ein derartiges Drehmoment oder eine derartige Winkelgeschwindigkeit stellt und/oder erzeugt, dass der Istwinkelwert auf den Sollwinkelwert hin geregelt wird. Von Vorteil ist dabei, dass abhängig von der linearen Istposition der Hebelarm gedreht wird und somit der Zentrierdorn stets unter einer Aufnahme des Objekts positionierbar ist und immer weiter zur und dann in die Aufnahme einführbar ist, obwohl die lineare Bewegung eine bremsbeschleunigte Bewegung ist.

Bei einer vorteilhaften Ausgestaltung wird, sobald der Zentrierdorn die von der Fördervorrichtung und/oder der Trägereinheit am weitesten entfernte Position in Querrichtung erreicht, insbesondere als dritter Verfahrensschritt, eine Bearbeitung am Objekt ausgeführt und hierzu ist das erste Rad und/oder das Objekt unbewegt, insbesondere und die Trägereinheit. Von Vorteil ist dabei, dass eine Bearbeitung des Objekts im Stillstand ausführbar ist.

Bei einer vorteilhaften Ausgestaltung wird nach der Bearbeitung, insbesondere als vierter Verfahrensschritt, die Trägereinheit in Förderrichtung beschleunigt und das erste Rad wird derart drehbeschleunigt, dass der erfasste Istwinkelwert des Hebelarms hingeregelt wird auf den aus der erfassten Linearposition der Trägereinheit bestimmten Sollwinkelwert,
insbesondere wodurch ab Erreichen einer weiteren Position der Zentrierdorn aus einer Aufnahme des Objekts herausgefahren wird. Von Vorteil ist dabei, dass nach der Bearbeitung in analoger Weise wie vor der Bearbeitung die Bewegung ausführbar ist. Dabei ist eine Master-Slave-Regelung anwendbar und somit eine präzise Steuerung ausführbar.

Bei einer vorteilhaften Ausgestaltung wird das zweite Rad stets um denselben auf den Hebelarm bezogenen Winkelbetrag aber in entgegengesetzter Drehrichtung gedreht wie der Hebelarm um die Drehachse gedreht wird,
wobei der Zentrierdorn zum zweiten Rad fest ausgerichtet ist,
so, dass der Zentrierdorn stets diejenige Umfangsposition des zweiten Rads, insbesondere bezogen auf die am Hebelarm drehgelagerte Drehachse des zweiten Rads, in Umfangsrichtung des zweiten Rads überdeckt, die den größten Abstand zur Trägereinheit und/oder Fördervorrichtung aufweist. Von Vorteil ist dabei, dass der Zentrierdorn stets an der höchsten Stelle ist und somit in Querrichtung in die Aufnahmen des Objekts eingeführt wird.

Bei einer vorteilhaften Ausgestaltung wird der Sollwinkelwert als ein Arcuscosinuswert der Linearposition bestimmt. Von Vorteil ist dabei, dass die Bestimmung des Sollwinkelwertes in einfacher Weise ermöglicht ist.

Wichtige Merkmale bei der Anlage zur Durchführung des Verfahrens sind, dass die Linearposition durch einen linearen Wegsensor erfasst wird und die Winkellage des Hebelarms durch einen Winkelsensor,
wobei die Fördervorrichtung von einem Elektromotor angetrieben ist und der hebelarmüber eine Getriebestufe oder einen Kurbeltrieb von einem weiteren Elektromotor.

Von Vorteil ist dabei, dass eine einfache Erfassung der Istwerte ermöglicht ist und somit einer Steuerung, mit denen die beiden Motoren verbunden sind, zuführbar sind.

Weitere Vorteile ergeben sich aus den Unteransprüchen.

Die Erfindung wird nun anhand von schematischen Abbildungen näher erläutert:
In der Figur 1 ist ein Bereich einer erfindungsgemäßen Anlage, insbesondere zur Herstellung von Fahrzeugen in Seitenansicht schematisch dargestellt, wobei eine Stange 4 einer Hubeinheit in einer ersten Drehstellung sich befindet und ein Objekt 1, insbesondere ein Fahrzeuggestell, sich in einer ersten Linearposition befindet.
In der Figur 2 ist die Stange 4 in einer anderen Drehstellung und das Objekt 1 an einer anderen Linearposition, wobei das Objekt 1 auf einem mit der Stange 4 verbundenen Zentrierdorn 6 aufgenommen ist.

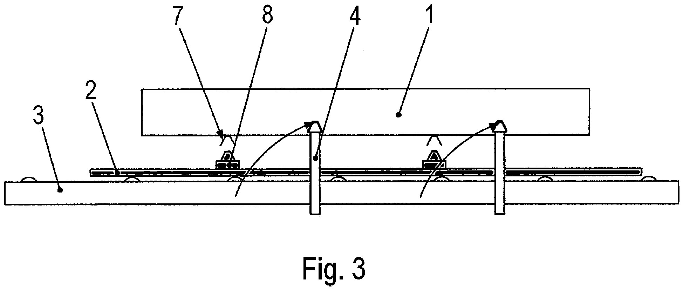

In der Figur 3 ist die Stange 4 in einer weiteren Drehstellung und das Objekt 1 an einer weiteren Linearposition, so dass die Stange 4 vertikal ausgerichtet ist und das Objekt 1 angehoben ist.
In der Figur 4 ist eine Abstandsverstellung mittels eines zwischen zwei solchen Stangen 4 dargestellt, zwischen denen ein Linearaktor 40, insbesondere Spindelmotor, angeordnet ist.
In der Figur 5 ist die Hubeinheit schematisch und näher dargestellt.
In der Figur 6 ist eine alternative Hubeinheit schematisch und näher dargestellt.

Wie in den Figuren dargestellt, wird ein Objekt 1 auf einer Fördervorrichtung 3, insbesondere Rollenbahn 3, linear gefördert und bei Erreichen einer ersten Position entlang der Rollenbahn das Objekt 1 von Stangen 4 zweier, entlang der Rollenbahn 3 angeordneten Hubeinheiten angehoben, wobei an jeder der Stangen 4 ein Zentrierdorn 8 angeordnet ist, der in eine jeweilige Aufnahme 6 des Objekts 1 eingreift.

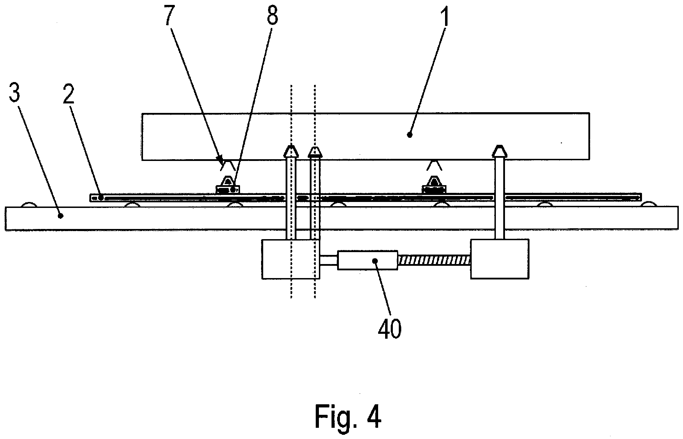

Wie in Figur 4 gezeigt, ist eine der Hubeinheiten entlang der Förderrichtung der Fördervorrichtung, 3, insbesondere Rollenbahn 3, mittels eines Linearaktors 40, insbesondere Spindelmotor, verschiebbar angeordnet, so dass je nach Art des Objekts 1 verschieden weite Abstände der Aufnahmen 7 ermöglicht sind.

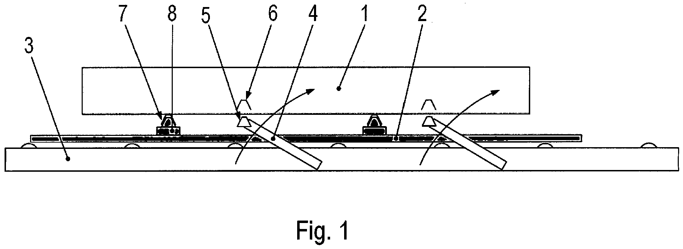

Wie in Figur 1 gezeigt, ist das Objekt 1 zunächst auf der Trägereinheit 2 aufgenommen, welche von der Fördervorrichtung 3, insbesondere Rollenbahn, in Förderrichtung gefördert wird. Dabei weist das Objekt 1 Aufnahmen 7 auf, die insbesondere in Fördervorrichtung voneinander beabstandet sind, Die Trägereinheit weist Dorne 8 auf, welche in die Aufnahmen 7 eingreifen. Somit ist das Objekt 1 von der Trägereinheit 2 mittransportierbar.

Am Objekt 1 sind weitere Aufnahmen 6 ausgebildet, in welche der mit der Stange 4 der jeweiligen Hubeinheit verbundene Zentrierdorn 5 eingreift, wenn die Stangen 4 geeignet synchron mit der Bewegung in Förderrichtung drehbewegt werden.

Nach dem Anheben des Objekts 1 und Aufnehmen der Zentrierdorne 5 in den Aufnahmen 6 mittels der Stangen 4 sind die Dorne 8 von den Aufnahmen 7 separiert.

Sobald das Objekt 1 seine in vertikaler Richtung höchste Position erreicht hat, wird das Objekt 1 ruhig gehalten und eine Bearbeitung ist ausführbar. Beispielsweise führen in den Figuren nicht gezeigte Schweißroboter ein Anbringen von Schweißpunkten oder ein Schweißverbinden aus.

Das Absenken des Objekts 1 erfolgt symmetrisch zum vorherigen Anheben, wobei gleichzeitig eine Beschleunigung der Trägereinheit 2 in Förderrichtung ausgeführt wird und die Drehbewegung der Stange 4 in derselben Drehrichtung fortgesetzt wird, in welcher die Stange 4 beim Anheben gedreht wurde.

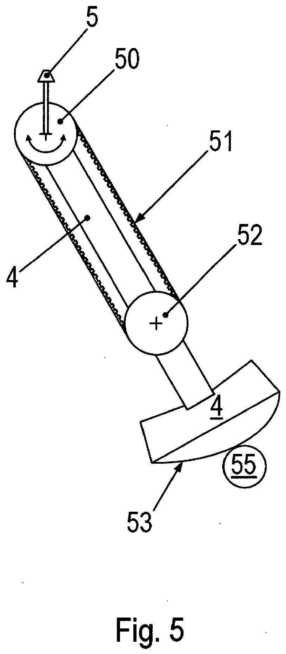

Wie in Figur 5 gezeigt, wird die Drehbewegung der Stange 4 derart ausgeführt, dass der Zentrierdorn 5 während der Drehbewegung immer an der höchsten vertikalen Position verbleibt.

Dies wird dadurch erreicht, indem ein Riementrieb verwendet wird, dessen erstes Rad 52 fest verbunden ist mit einem stationär angeordneten Teil, wie Gestänge oder mit dem Boden verbundenen Teil, wobei die Fördervorrichtung auf dem Boden aufgestellt ist, und dessen zweites Rad 50 an der Stange 4 drehbar gelagert ist. Die Stange 4 ist drehbar gelagert um eine Drehachse, die durch den Mittelpunkt des ersten Rades 52 hindurchgeht.

Die Stange 4 weist ein Zahnsegment auf, dessen Zähne im Eingriff stehen mit einem von einem Elektromotor antreibbaren Ritzel 55. Das Ritzel 55 wird beim Betrieb vom Motor um einen Winkelbetrag vorwärts gedreht und nach dem Stillstand wieder zurückgedreht. Somit wird die Stange 4 um einen dem Winkelbetrag gemäß Übersetzungszahl des aus dem Ritzel und dem Zahnsegment gebildeten Getriebes hin- und hergedreht.

Auf diese Weise wird bei Drehbewegung der Stange 4 um die Drehachse, welche durch das mit dem Boden fest verbundene erste Rad 52 hindurchgeht, das zweite Rad 50 bewegt, weil der Riemen 51 mit dem Umfang des ersten und des zweiten Rads gekoppelt ist.

Das Ritzel 55 ist dabei von einem elektromotorischen Antrieb, insbesondere Elektromotor oder Getriebemotor, angetrieben. Das erste Rad 50 wird stets in entgegengesetzter Drehrichtung wie die Stange 4 gedreht, aber um den gleichen Winkelbetrag. Somit ist der mit dem zweiten Rad 50 verbundene Zentrierdorn 5 in allen verwendeten Drehstellungen der Stange 4 stets konstant ausgerichtet, beispielsweise am höchsten Punkt festgelegt, also am weitesten entfernt von der Trägereinheit und/oder von der Fördervorrichtung angeordneten Punkt festgelegt.

Das erste Rad 52 weist vorzugsweise den gleichen Außendurchmesser wie das zweite Rad 50 auf. Somit ist der Winkelbetrag der Drehung der Stange 4 und der Winkelbetrag der Drehung des ersten Rades 52 synchron gekoppelt, insbesondere gleich groß. Der Riemen 51 ist vorzugsweise reibfest oder formschlüssig verbunden am ersten Rad 52 und am zweiten Rad 50.

Somit rollt das drehbar gelagerte zweite Rad 50 an der Innenseite des Riemens 51 schlupffrei ab.

Weiterer Vorteil dieser Ausführung ist, dass der Zentrierdorn 5 immer in vertikaler Ausrichtung verbleibt, insbesondere unabhängig vom Winkelbetrag der Drehung, insbesondere solange dieser Winkelbetrag viel kleiner als 180° ist und die Stange 4 somit nicht am Boden anschlägt.

Da der Zentrierdorn 5 unabhängig von der Winkelstellung der Stange 4 vertikal ausgerichtet bleibt, ist der Zentrierdorn 51 daher einfach einführbar in die entsprechende Aufnahme 7 des Objekts 1.

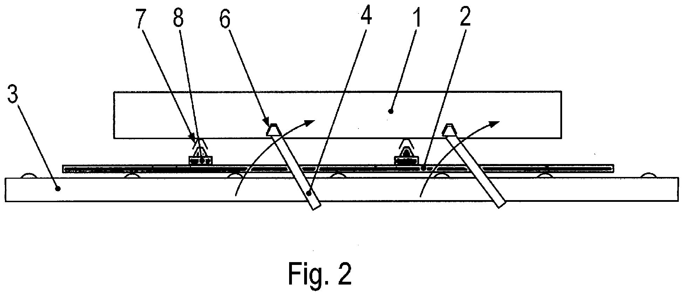

Beim Annähern des Objekts 1, also in der in Figur 1 gezeigten Situation, detektiert ein Sensor das Erreichen einer ersten Position der Trägereinheit 2, auf welcher das Objekt 1 aufgenommen ist, und der Antrieb der Fördervorrichtung 3 beginnt eine Bremsbeschleunigung auszuführen. Somit wird dann die Bewegung des Objekts 1 in Förderrichtung verlangsamt. Während dieser Verlangsamung wird die Stange 4 gedreht und der Zentrierdorn 7 in der in der Figur 2 gezeigten Situation eingeführt in die Aufnahme 7.

Die Verlangsamung der Trägereinheit 2 erfolgt vorzugsweise dadurch, dass der mit einem Sensor erfasste Istwert der Geschwindigkeit auf einen Sollwert hin geregelt wird, dessen zeitlicher Verlauf vorgegeben wird. Dabei wird als Stellgröße ein Drehmoment des die Fördervorrichtung 3 antreibenden Antriebs, insbesondere Elektromotors, verwendet.

Die Drehbewegung der Stange 4, also die Drehbewegung des das Ritzel 55 antreibenden elektrischen Antriebs, ist entsprechend der verlangsamten Bewegung der Fördervorrichtung 3 synchronisiert.

Hierzu erfasst ein Sensor die Istposition der Trägereinheit 2. Sobald die erste Position erreicht wird, startet der Antrieb des Ritzels 55. Dabei ist der Antrieb als von einem Umrichter gespeisten Elektromotor angetriebenes Getriebe ausgeführt. Die Winkelposition der Stange 4 wird erfasst, insbesondere direkt am Zahnsegment oder durch Bestimmen der Winkelposition des Ritzels 55 oder der Rotorwelle des das Getriebe antreibenden Elektromotors unter Berücksichtigung des Übersetzungsverhältnisses des Getriebes.

Die erfasste Istposition der Trägereinheit 2 wird von einer Steuerung, insbesondere einer im Umrichter integriert angeordneten Steuerung, zur Bestimmung einer Sollwinkelposition für die Stange 4 verwendet. Vorzugsweise wird die Sollposition gemäß einer Funktion aus der Istposition ermittelt. Dabei ist als Funktion auch eine Tabellenwerte interpolierende Funktion verwendbar.

Mittels eines Winkelsensors wird die Drehstellung der Stange 4 als Istwinkelwert erfasst und ein derartiger Stellwert von einem Regler der Steuerung bestimmt, dass der Istwinkelwert auf den Sollwinkelwert hin geregelt wird. Hierzu wird der Stellwert dem Antrieb des Ritzels 55 zugeführt. Der Antrieb erzeugt dann ein derartiges Drehmoment oder eine derartige Drehzahl, dass der Istwinkelwert möglichst nah zum Sollwinkelwert hingeregelt wird.

Nach Erreichen des vertikal höchsten Hubs des Objekts 1 wird dieses angehalten und zumindest ein Bearbeitungsschritt wie beispielsweise das Anbringen von Schweißpunkten mittels eines Roboters ausgeführt.

Nach Beendigung des Bearbeitungsschritts wird die Trägereinheit 2 und der Antrieb des ersten Rads beschleunigt. Dabei wird wiederum die Istposition der Trägereinheit 2 erfasst, daraus gemäß einer Funktion der Sollwinkelwert bestimmt und der von dem weiteren Sensor erfasste Istwinkelwert der Stange 4 hingeregelt auf den Sollwinkelwert, indem die Drehzahl oder das Drehmoment des Antriebs des ersten Rades 52 als Stellgröße verwendet wird. Die Beschleunigung der Trägereinheit 2 erfolgt gemäß einem vorgegebenen zeitabhängigen Verlauf der Beschleunigung oder indem die Istgeschwindigkeit der Trägereinheit 2 auf eine Sollgeschwindigkeit hingeregelt wird, deren zeitlicher Verlauf vorgegeben wird.

Das erste Rad 52 ist stationär befestigt, also bezogen auf den Boden der Anlage unbeweglich angeordnet.

Das zweite Rad 50 ist drehbar an der Stange 4 gelagert und von einem an der Stange 4 befestigten elektromotorischen Antrieb, insbesondere Elektromotor oder Getriebemotor, angetrieben.

Das Objekt 1 ist beispielsweise ein Fahrzeuggestell, wie Karosserie oder dergleichen.

Die Trägereinheit 2 ist beispielsweise als Skid ausführbar. Die Fördervorrichtung 3 ist beispielsweise als Rollenbahn ausgeführt, wobei Rollen der Rollenbahn von einem Antrieb, insbesondere über Riemen, angetrieben werden. Der Antrieb weist vorzugsweise einen Umrichter-gespeisten Elektromotor auf, der auch einen Sensor zur Erfassung der Winkellage der Rotorwelle des Elektromotors oder zur Erfassung der Winkellage des Ritzels aufweist.

Die Stange 4 ist drehbar um die Radachse des ersten Rads 52 gelagert. Das zweite Rad 50 ist drehbar gelagert an der Stange 4, wobei der Durchmesser des ersten Rades 52 dem Durchmesser des zweiten Rads 50 gleicht.

Die Aufnahmen (6, 7) sind als Vertiefungen am Objekt 1 ausgeformt und somit kostengünstig und einfach hergestellt. Die Vertiefungen sind dabei bevorzugt in vertikaler Richtung ausgerichtet.

Die vertikale Richtung ist senkrecht zur Horizontalen 53, insbesondere also zur horizontalen Richtung 53, ausgerichtet.

Beim Eingreifen des Zentrierdorns 5 in die Aufnahme 6 bewegt sich der Zentrierdorn 5 relativ zum Objekt 1 ausschließlich in vertikaler Richtung. Abweichungen hiervon, also Geschwindigkeitsanteile in horizontaler Richtung werden durch Regelabweichungen bewirkt, die aber gegen Null geregelt werden sollen.

Wie in Figur 5 gezeigt, ist an der Stange 4, also dem Hebelarm, ein Zahnsegment 53, also Zahnradsegment, angeordnet und fest verbunden. Die Verzahnung, insbesondere die Zähne der Verzahnung, sind mit der Verzahnung eines von dem zweiten Elektromotor angetriebenen Ritzels 55 im Eingriff. Wichtig ist dabei, dass der Antrieb des Ritzels, insbesondere also der zweite Elektromotor, die Stange 4 nur um einen Winkelbetrag hin- und herbewegt, der kleiner als 180° ist.

Das Ritzel ist vom zweiten Elektromotor, vorzugsweise einem Synchronmotor, entweder direkt antreibbar oder alternativ über ein in den Figuren nicht gezeigtes Getriebe.

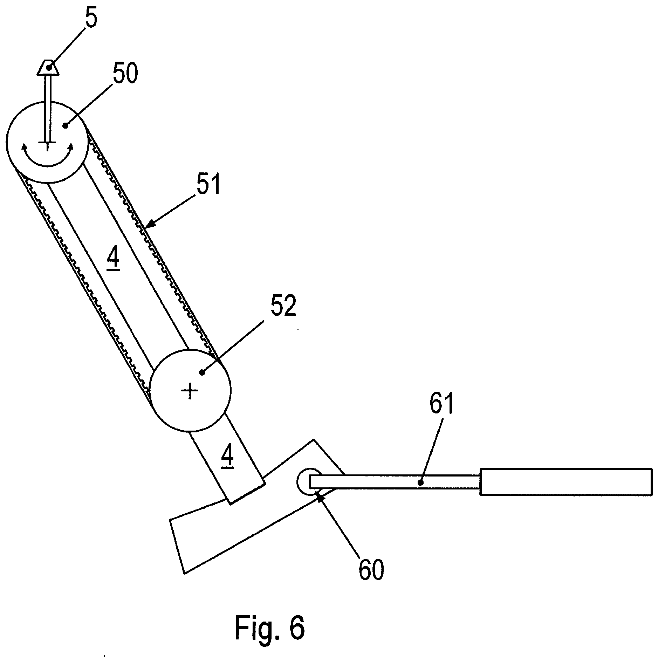

Wie in Figur 6 gezeigt, ist aber auch eine Schwenkbewegung der Stange 4 durch einen Linearaktor 61, insbesondere Linearantrieb, ausführbar, wobei die linear hin- und herbewegbare Kolbenstange des Linearaktors über ein Drehgelenk 61 mit der Stange 4 verbunden ist. Dabei ist der Linearaktor 60 selbst wiederum drehbar gegenüber dem Gestänge oder Boden gelagert.

Bei weiteren erfindungsgemäßen Ausführungsbeispielen wird statt der Rollenbahn ein Fließband verwendet und/oder statt der Stange 4 als Hebelarm ausgeführt ist.

### Bezugszeichenliste

1 Objekt, insbesondere Fahrzeuggestell
2 Trägereinheit
3 Fördervorrichtung, insbesondere Rollenbahn
4 Stange einer Hubeinheit
5 Zentrierdorn
6 Aufnahme
7 Aufnahme
8 Dorn
40 Linearaktor, insbesondere Spindelmotor
50 Rad
51 Riemen, insbesondere Zahnriemen oder Kette
52 Rad
53 Zahnsegment, also Zahnradsegment
55 Ritzel
60 Drehgelenk
61 Linearaktor, insbesondere Linearantrieb

## Patentansprüche

1. Verfahren zum Betreiben einer Anlage, insbesondere System, mit einer von einem ersten Antrieb antreibbaren Fördervorrichtung (3) und einer Hubeinheit,
wobei in einem ersten Verfahrensschritt ein Objekt (1) auf einer Trägereinheit (2) aufgenommen ist,
wobei zeitlich nachfolgend, insbesondere also in einem zweiten Verfahrensschritt, die Trägereinheit (2) mittels der Fördervorrichtung (3) in Förderrichtung mit einer Bremsbeschleunigung bewegt, insbesondere gefördert, wird,
wobei die Hubeinheit einen zu einer Drehachse der Hubeinheit schwenkbar angeordneten, stets in der Querrichtung ausgerichteten Zentrierdorn (5) aufweist,
**dadurch gekennzeichnet, dass**
während der mit Bremsbeschleunigung ausgeführten Bewegung der Trägereinheit (2) das Objekt (1) von der Hubeinheit in Querrichtung, insbesondere quer zur Förderrichtung, insbesondere in zur Förderrichtung senkrechten Richtung, bewegt, insbesondere angehoben, wird,
wobei die Fördervorrichtung (3), insbesondere der erste Antrieb, einen ersten Elektromotor aufweist,
wobei die Hubeinheit einen um die Drehachse drehbar angeordneten Hebelarm, insbesondere Hubbalken, aufweist,
wobei der Hebelarm relativ zu einem ersten Rad (52) drehbar gelagert ist, wobei die Drehachse koaxial zur Radachse ausgerichtet ist,
wobei an dem Hebelarm ein vom ersten Rad (52) beabstandetes zweites Rad (50) angeordnet und drehbar gelagert ist,
wobei das erste Rad (52) fest verbunden ist mit einem stationär angeordneten Teil der Anlage,
wobei ein Riemen (51), insbesondere Zahnriemen oder Kette, auf den beiden Rädern angeordnet ist,
wobei der Hebelarm um die Drehachse, also Radachse (52) des ersten Rads (52), mittels eines zweiten Antriebs drehbar ist,
wobei das zweite Rad (50) drehbar gelagert ist am Hebelarm,
wobei der zweite Antrieb einen zweiten Elektromotor aufweist,
wobei der Durchmesser des ersten Rades (52) gleich groß ist wie der Durchmesser des zweiten Rades (50),
wobei die Drehachse senkrecht zur Förderrichtung und senkrecht zur Querrichtung ausgerichtet ist.

2. Verfahren nach Anspruch 1,
**dadurch gekennzeichnet, dass**
die Position der Trägereinheit (2), insbesondere die Linearposition der Trägereinheit (2) in Förderrichtung, erfasst wird und daraus einen Sollwinkelwert für den Hebelarm bestimmt wird,
wobei die Drehwinkelstellung des Hebelarms, insbesondere bezüglich der Drehachse, als Istwinkelwert erfasst wird und auf den Sollwinkelwert hin geregelt wird, insbesondere indem der zweite Antrieb ein derartiges Drehmoment oder eine derartige Winkelgeschwindigkeit stellt und/oder erzeugt, dass der Istwinkelwert auf den Sollwinkelwert hin geregelt wird.

3. Verfahren nach einem der vorangegangenen Ansprüche,
**dadurch gekennzeichnet, dass**
sobald der Zentrierdorn (5) die von der Fördervorrichtung (3) und/oder der Trägereinheit (2) am weitesten entfernte Position in Querrichtung erreicht, insbesondere als dritter Verfahrensschritt, eine Bearbeitung am Objekt (1) ausgeführt wird und hierzu das erste Rad (52) und/oder das Objekt (1) unbewegt ist.

4. Verfahren nach einem der vorangegangenen Ansprüche,
**dadurch gekennzeichnet, dass**
nach der Bearbeitung, insbesondere als vierter Verfahrensschritt, die Trägereinheit (2) in Förderrichtung beschleunigt wird und der Hebelarm derart drehbeschleunigt wird, dass der erfasste Istwinkelwert des Hebelarms hingeregelt wird auf den aus der erfassten Linearposition der Trägereinheit (2) bestimmten Sollwinkelwert,
insbesondere wodurch ab Erreichen einer weiteren Position der Zentrierdorn (5) aus einer Aufnahme (6, 7) des Objekts (1) herausgefahren wird.

5. Verfahren nach einem der vorangegangenen Ansprüche,
**dadurch gekennzeichnet, dass**
das zweite Rad (50) stets um denselben auf den Hebelarm bezogenen Winkelbetrag aber in entgegengesetzter Drehrichtung gedreht wird wie der Hebelarm um die Drehachse gedreht wird,
wobei der Zentrierdorn (5) zum zweiten Rad (50) fest ausgerichtet ist und/oder am zweiten Rad (50) befestigt ist, insbesondere unabhängig von der Winkelstellung des Hebelarms,
insbesondere so, dass der Zentrierdorn (5) stets diejenige Umfangsposition des zweiten Rads (50), insbesondere bezogen auf die am Hebelarm drehgelagerte Drehachse des zweiten Rads (50), in Umfangsrichtung des zweiten Rads (50) überdeckt, die den größten Abstand zur Trägereinheit (2) und/oder Fördervorrichtung (3) aufweist.

6. Verfahren nach einem der vorangegangenen Ansprüche,
**dadurch gekennzeichnet, dass**
der Sollwinkelwert als ein Arcuscosinuswert der Linearposition bestimmt wird.

7. Anlage zur Durchführung eines Verfahrens zum Betreiben der Anlage,
wobei die Anlage eine von einem ersten Antrieb antreibbaren Fördervorrichtung (3) und eine Hubeinheit aufweist,
insbesondere wobei in einem ersten Verfahrensschritt des Verfahrens ein Objekt (1) auf einer Trägereinheit (2) aufgenommen ist,
insbesondere wobei zeitlich nachfolgend, insbesondere also in einem zweiten Verfahrensschritt des Verfahrens, die Trägereinheit (2) mittels der Fördervorrichtung (3) in Förderrichtung mit einer Bremsbeschleunigung bewegt, insbesondere gefördert, wird,
insbesondere wobei während dieser mit Bremsbeschleunigung ausgeführten Bewegung der Trägereinheit (2) das Objekt (1) von der Hubeinheit in Querrichtung, insbesondere quer zur Förderrichtung, insbesondere in zur Förderrichtung senkrechten Richtung, bewegt, insbesondere angehoben, wird,
wobei die Hubeinheit einen zu einer Drehachse der Hubeinheit schwenkbar angeordneten, stets in der Querrichtung ausgerichteten Zentrierdorn (5) aufweist
**dadurch gekennzeichnet, dass**
die Linearposition durch einen linearen Wegsensor erfasst wird und die Winkellage des ersten Rades (52) durch einen Winkelsensor,
wobei die Fördervorrichtung (3) von einem ersten Elektromotor angetrieben ist und der Hebelarm von einem zweiten Elektromotor,
wobei die Hubeinheit einen um die Drehachse drehbar angeordneten Hebelarm, insbesondere Hubbalken, aufweist,
wobei der Hebelarm relativ zu einem ersten Rad (52) drehbar gelagert ist, wobei die Drehachse koaxial zur Radachse ausgerichtet ist,
wobei an dem Hebelarm ein vom ersten Rad (50) beabstandetes zweites Rad (50) angeordnet und drehbar gelagert ist,
wobei das erste Rad (52) fest verbunden ist mit einem stationär angeordneten Teil der Anlage,
wobei ein Riemen (51), insbesondere Zahnriemen oder Kette, auf den beiden Rädern angeordnet ist,
wobei der Hebelarm um die Drehachse, also Radachse (52) des ersten Rads (52), mittels des zweiten Elektromotors drehbar ist,
wobei das zweite Rad (50) drehbar gelagert ist am Hebelarm,
wobei der Durchmesser des ersten Rades (52) gleich groß ist wie der Durchmesser des zweiten Rades (50),
wobei die Drehachse senkrecht zur Förderrichtung und senkrecht zur Querrichtung ausgerichtet ist.

## Claims

1. A method of operating an installation, in particular system, having a conveying device (3), driveable by a first drive, and a lifting unit,
wherein an object (1) is received on a carrier unit (2) in a first method step,
wherein subsequently, in particular therefore in a second method step, the carrier unit (2) is moved, in particular conveyed, by means of the conveying device (3) in a conveying direction with a braking acceleration,
wherein the lifting unit has a centring pin (5) which is pivotably arranged with regard to a rotational axis of the lifting unit and which is always oriented in the transverse direction, **characterised in that**
during the movement of the carrier unit (2) carried out with braking acceleration, the object (1) is moved, in particular raised, by the lifting unit in a transverse direction, in particular transversely to the conveying direction, in particular in a direction perpendicular to the conveying direction,
wherein the conveying device (3), in particular the first drive, has a first electric motor, wherein the lifting unit has a lever arm, in particular lifting beam, rotatably arranged about the rotational axis,
wherein the lever arm is rotatably mounted relative to a first wheel (52), wherein the rotational axis is oriented coaxially with the wheel axle,
wherein a second wheel (50), spaced apart from the first wheel (52), is arranged and rotatably mounted on the lever arm,
wherein the first wheel (52) is securely connected to a stationarily arranged part of the installation,
wherein a belt (51), in particular toothed belt or chain, is arranged on the two wheels, wherein the lever arm is rotatable about the rotational axis, therefore wheel axle (52) of the first wheel (52), by means of a second drive,
wherein the second wheel (50) is rotatably mounted on the lever arm,
wherein the second drive has a second electric motor,
wherein the diameter of the first wheel (52) is the same in length as the diameter of the second wheel (50),
wherein the rotational axis is oriented perpendicularly to the conveying direction and perpendicularly to the transverse direction.

2. A method according to claim 1,
**characterised in that**
the position of the carrier unit (2), in particular the linear position of the carrier unit (2) in a conveying direction, is detected and a desired angular value for the lever arm is determined therefrom,
wherein the rotational angular position of the lever arm, in particular with regard to the rotational axis, is detected as an actual angular value and is regulated to the desired angular value, in particular **in that** the second drive sets and/or generates such a torque or such an angular velocity that the actual angular value is regulated to the desired angular value.

3. A method according to any one of the preceding claims,
**characterised in that**
as soon as the centring pin (5) reaches the furthest distant position in a transverse direction from the conveying device (3) and/or the carrier unit (2), in particular as a third method step there is carried out working on the object (1) and for this purpose the first wheel (52) and/or the object (1) is/are motionless.

4. A method according to any one of the preceding claims,
**characterised in that**
after the working, in particular as a fourth method step, the carrier unit (2) is accelerated in a conveying direction and the lever arm is rotationally accelerated in such a manner that the detected actual angular value of the lever arm is regulated to the desired angular value determined from the detected linear position of the carrier unit (2),
in particular whereby when a further position has been reached, the centring pin (5) is moved out of a receiver (6, 7) of the object (1).

5. A method according to any one of the preceding claims,
**characterised in that**
the second wheel (50) is always rotated by the same angular amount related to the lever arm, however is rotated about the rotational axis in an opposite rotational direction to the lever arm,
wherein the centring pin (5) is fixedly oriented with respect to the second wheel (50) and/or is secured to the second wheel (50), in particular regardless of the angular position of the lever arm,
in particular such that the centring pin (5) always covers that circumferential position of the second wheel (50), in particular related to the rotational axis, rotationally mounted on the lever arm, of the second wheel (50), in a circumferential direction of the second wheel (50), which is at the greatest distance from the carrier unit (2) and/or conveying device (3).

6. A method according to any one of the preceding claims,
**characterised in that**
the desired angular value is determined as an arc cosine value of the linear position.

7. An installation for carrying out a method of operating the installation,
wherein the installation has a conveying device (3), driveable by a first drive, and a lifting unit,
in particular wherein an object (1) is received on a carrier unit (2) in a first method step of the method,
in particular wherein subsequently, in particular therefore in a second method step of the method, the carrier unit (2) is moved, in particular conveyed, by means of the conveying device (3) in a conveying direction with a braking acceleration,
in particular wherein during this movement of the carrier unit (2) carried out with braking acceleration, the object (1) is moved, in particular raised, by the lifting unit in a transverse direction, in particular transversely to the conveying direction, in particular in a direction perpendicular to the conveying direction,
wherein the lifting unit has a centring pin (5) which is pivotably arranged with regard to a rotational axis of the lifting unit and which is always oriented in the transverse direction, **characterised in that**
the linear position is detected by a linear path sensor and the angular position of the first wheel (52) by an angle sensor,
wherein the conveying device (3) is driven by a first electric motor and the lever arm by a second electric motor,
wherein the lifting unit has a lever arm, in particular lifting beam, rotatably arranged about the rotational axis,
wherein the lever arm is rotatably mounted relative to a first wheel (52), wherein the rotational axis is oriented coaxially with the wheel axle,
wherein a second wheel (50), spaced apart from the first wheel (50), is arranged and rotatably mounted on the lever arm,
wherein the first wheel (52) is securely connected to a stationarily arranged part of the installation,
wherein a belt (51), in particular toothed belt or chain, is arranged on the two wheels, wherein the lever arm is rotatable about the rotational axis, therefore wheel axle (52) of the first wheel (52), by means of the second electric motor,
wherein the second wheel (50) is rotatably mounted on the lever arm,
wherein the diameter of the first wheel (52) is the same in length as the diameter of the second wheel (50),
wherein the rotational axis is oriented perpendicularly to the conveying direction and perpendicularly to the transverse direction.

## Revendications

1. Procédé pour exploiter une installation, en particulier un système, avec un dispositif de convoyage (3) pouvant être entraîné par un premier entraînement et une unité de levage,
dans lequel, lors d'une première étape du procédé, un objet (1) est reçu sur une unité de support (2),
dans lequel, ultérieurement dans le temps, en particulier donc lors d'une deuxième étape du procédé, l'unité de support (2) est déplacée, en particulier convoyée, au moyen du dispositif de convoyage (3) dans la direction de convoyage avec une accélération de freinage,
dans lequel l'unité de levage présente un pion de centrage (5) orienté de manière pivotante par rapport à un axe de rotation de l'unité de levage, toujours orienté dans la direction transversale,
**caractérisé en ce que**
pendant le mouvement de l'unité de support (2) exécuté avec une accélération de freinage, l'objet (1) est déplacé, en particulier soulevé, par l'unité de levage dans la direction transversale, en particulier transversalement à la direction de convoyage, en particulier dans une direction perpendiculaire à la direction de convoyage, le dispositif de convoyage (3), en particulier le premier entraînement, comportant un premier moteur électrique, l'unité de levage comportant un bras de levier, en particulier une poutre de levage, monté pivotant autour de l'axe de rotation, le bras de levier étant monté pivotant par rapport à une première roue (52), l'axe de rotation étant aligné coaxialement à l'axe de roue, une deuxième roue (50), espacée de la première roue (52), étant agencée et montée pivotante sur le bras de levier, la première roue (52) étant fixée à une partie de l'installation disposée de manière stationnaire, une courroie (51), en particulier une courroie crantée ou une chaîne, étant agencée sur les deux roues, le bras de levier étant pivotant autour de l'axe de rotation, donc l'axe de roue (52) de la première roue (52), au moyen d'un deuxième entraînement, la deuxième roue (50) étant montée pivotante sur le bras de levier, le deuxième entraînement comportant un deuxième moteur électrique, le diamètre de la première roue (52) étant de même taille que le diamètre de la deuxième roue (50), l'axe de rotation étant orienté perpendiculairement à la direction de convoyage et perpendiculairement à la direction transversale.

2. Procédé selon la revendication 1, **caractérisé en ce que** la position de l'unité de support (2), en particulier la position linéaire de l'unité de support (2) dans la direction de convoyage, est détectée et qu'une valeur angulaire de consigne pour le bras de levier en est déterminée, la position angulaire de rotation du bras de levier, en particulier par rapport à l'axe de rotation, étant détectée comme valeur angulaire réelle et régulée vers la valeur angulaire de consigne, en particulier **en ce que** le deuxième entraînement fournit et/ou génère un tel couple ou une telle vitesse angulaire que la valeur angulaire réelle est régulée vers la valeur angulaire de consigne.

3. Procédé selon l'une des revendications précédentes, **caractérisé en ce que** dès que le pion de centrage (5) atteint la position la plus éloignée en direction transversale de la part du dispositif de convoyage (3) et/ou de l'unité de support (2), en particulier comme troisième étape du procédé, un usinage de l'objet (1) est exécuté et, à cet effet, la première roue (52) et/ou l'objet (1) est immobile.

4. Procédé selon l'une des revendications précédentes, **caractérisé en ce que**, après l'usinage, en particulier comme quatrième étape du procédé, l'unité de support (2) est accélérée dans la direction de convoyage et le bras de levier est accéléré en rotation de telle sorte que la valeur angulaire réelle détectée du bras de levier est régulée vers la valeur angulaire de consigne déterminée à partir de la position linéaire détectée de l'unité de support (2), en particulier de sorte qu'à partir de l'atteinte d'une position supplémentaire, le pion de centrage (5) est extrait d'un logement (6, 7) de l'objet (1).

5. Procédé selon l'une des revendications précédentes, **caractérisé en ce que** la deuxième roue (50) est toujours tournée d'un même montant angulaire relatif au bras de levier mais dans le sens de rotation opposé à celui du bras de levier autour de l'axe de rotation, le pion de centrage (5) étant orienté de manière fixe par rapport à la deuxième roue (50) et/ou fixé à la deuxième roue (50), en particulier indépendamment de la position angulaire du bras de levier, en particulier de sorte que le pion de centrage (5) recouvre toujours la position périphérique de la deuxième roue (50), en particulier par rapport à l'axe de rotation de la deuxième roue (50) montée pivotante sur le bras de levier, dans la direction périphérique de la deuxième roue (50), qui présente la plus grande distance par rapport à l'unité de support (2) et/ou au dispositif de convoyage (3).

6. Procédé selon l'une des revendications précédentes, **caractérisé en ce que** la valeur angulaire de consigne est déterminée comme une valeur d'arccosinus de la position linéaire.

7. Installation pour la mise en œuvre d'un procédé pour exploiter l'installation, l'installation comportant un dispositif de convoyage (3) pouvant être entraîné par un premier entraînement et une unité de levage, en particulier dans laquelle, lors d'une première étape du procédé, un objet (1) est reçu sur une unité de support (2), en particulier dans laquelle, ultérieurement dans le temps, en particulier donc lors d'une deuxième étape du procédé, l'unité de support (2) est déplacée, en particulier convoyée, au moyen du dispositif de convoyage (3) dans la direction de convoyage avec une accélération de freinage, en particulier dans laquelle, pendant ce mouvement de l'unité de support (2) exécuté avec une accélération de freinage, l'objet (1) est déplacé, en particulier soulevé, par l'unité de levage dans la direction transversale, en particulier transversalement à la direction de convoyage, en particulier dans une direction perpendiculaire à la direction de convoyage, l'unité de levage comportant un pion de centrage (5) orienté de manière pivotante par rapport à un axe de rotation de l'unité de levage, toujours orienté dans la direction transversale, **caractérisé en ce que** la position linéaire est détectée par un capteur de déplacement linéaire et la position angulaire de la première roue (52) par un capteur d'angle, le dispositif de convoyage (3) étant entraîné par un premier moteur électrique et le bras de levier par un deuxième moteur électrique, l'unité de levage comportant un bras de levier, en particulier une poutre de levage, monté pivotant autour de l'axe de rotation, le bras de levier étant monté pivotant par rapport à une première roue (52), l'axe de rotation étant aligné coaxialement à l'axe de roue, une deuxième roue (50), espacée de la première roue (50), étant agencée et montée pivotante sur le bras de levier, la première roue (52) étant fixée à une partie de l'installation disposée de manière stationnaire, une courroie (51), en particulier une courroie crantée ou une chaîne, étant agencée sur les deux roues, le bras de levier étant pivotant autour de l'axe de rotation, donc l'axe de roue (52) de la première roue (52), au moyen du deuxième moteur électrique, la deuxième roue (50) étant montée pivotante sur le bras de levier, le diamètre de la première roue (52) étant de même taille que le diamètre de la deuxième roue (50), l'axe de rotation étant orienté perpendiculairement à la direction de convoyage et perpendiculairement à la direction transversale.
